# EUROPEAN PATENT SPECIFICATION

(11) **EP 1 629 161 B1**
(45) Date of publication and mention of the grant of the patent: **13.09.2006**
(21) Application number: 03727971.8
(22) Date of filing: 22.05.2003
(51) Int. Cl.: E04D 3/35, E04C 2/292, B29C 44/12

(54) **PROCESS AND APPARATUS FOR MANUFACTURING OF INSULATING PANELS WITH ROOF TILE ASPECT**
VERFAHREN UND VORRICHTUNG ZUR HERSTELLUNG VON ISOLIERPLATTEN IN FORM VON DACHZIEGELN
PROCEDE ET APPAREIL DE FABRICATION DE PANNEAUX ISOLANTS A ASPECT DE TUILE

(43) Date of publication of application: 01.03.2006
(73) Proprietor: METECNO S.p.A., 20067 Tribiano (IT)
(72) Inventor: MORANDI, Maurizio, I-10143 Torino (IT)
(74) Representative: Ferroni, Filippo
(86) International application number: PCT/IT2003/000309
(87) International publication number: WO 2004/104316

(56) References cited:
- WO-A-87/05650
- FR-A- 2 366 127
- US-A- 4 191 722

## Description

The invention relates to insulating panels for roofs of buildings and in particular panels which reproduce the effect of house roofs.

These panels have a composite structure, also called "sandwich", wherein a core of insulating material is arranged between two faces, the first of which is the upper face with respect to the mounting condition of the roof panels, and is visible from the exterior, while the other face, the lower one, is visible from underneath the roof.

The material of the insulating core is usually a polymer foam such as expanded polyurethane or the like, but may also comprise rock wool or the like, while the outer faces of the panels are in most cases painted, galvanized or otherwise treated sheets of metal such as steel, copper or aluminium.

In present case the upper face of the panels is profiled and pressed so as to reproduce the aesthetic effect of bent tiles, plain tiles, under tiles or other similar tile components which form the roofs of houses, while the bottom face is mainly smooth or has a slight stiffening ribs.

In the remainder of this description reference will be made mainly, where not otherwise specified, to panels reproducing the bent tiles of roofs since said tiles have a simple shape and are widespread; however, this must not be understood as limiting and what will be stated must be regarded applicable also to panels having the appearance of roofs formed by plain tiles or by the other types of tile components mentioned above.

In order to obtain the desired aspect, the upper face of the panels is profiled with longitudinal undulations and press-forged with ribs transverse thereto which provide the "bent tile effect", with the typical overlapped arrangement of the tiles in roofing, see e.g. WO 87/05650. These transverse ribs are the source of some difficulties during the manufacturing process of the panels in the known plants.

For example, in the latter the step involving expansion of the polymer resin is carried out in special continuous presses where a pair of continuous conveyors, arranged respectively above and below the semi-finished product formed by the metal strips with the polymer resin arranged there between, constrain the increase in volume and the forces resulting from expansion thereof; for an overview of this technique, reference should be made to European Patent Application No. 110,265 in the name of the same Applicants of the present application.

The continuous conveyors are of the type comprising parallel chains which support between them, cross-members carrying shaped elements matching with the tiles press-forged in the panels.

However, when it is required to change the length of the tiles formed by pressing, it is necessary to vary the pitch between the transverse ribs; it therefore follows that the shaped elements of the associated continuous conveyor must also be replaced.

This requires a change of tooling with stoppage of the machine thereby resulting in a disadvantageous situation, in particular taking account that variation of the distance between the transverse ribs requires only a change in the frequency of the press which forges the metal sheet.

Another important drawback arising from the presence of the transverse ribs consists in the fact they prevent the continuous production of the panels, contrarily to what occurs normally for the panels which are only fretted or undulated.

Indeed, after the transverse ribs have been pressed in the sheet metal, the latter cannot be further bent along the edges by using profiling rollers as in the case of fretted or undulated sheets; as a matter of consequence the semi-finished product obtained after expansion of the polyurethane foam in the continuous press must have a definitive configuration, ready for final cutting of the panels.

This results, however, in the fact that known presses which also use continuous lateral conveyors for constraining the expansion of the polyurethane foam along the edges of the strips, cannot be used for the edge of that strip having the tile effect, projecting sidewise in order to allow overlapping with an adjacent panel in the assembled condition.

The problems outlined above result in a need for a new process of manufacturing insulating panels, having a pressed sheet-metal face with transverse ribs which provide the overlapping arrangement of bent tiles, plain tiles or similar tile components used in the roofings of buildings.

The object of the present invention is that of providing this new process.

Such an object is achieved by a process which is characterized in that in the continuous press, the transverse ribs of the strip which provide the overlapping effect of the tiles are respectively in contact with surfaces having a uniform cross-section and the same profile of at least a main portion of the said ribs.

In this way when the distance between the ribs is changed, there is no interference of the strip with the continuous press since it is always in contact with surfaces having the same profile as the ribs.

In accordance with a preferred embodiment of the invention, manufacturing of the panels is carried out continuously in a process which includes a step of pressing the transverse ribs that provide the effect of the tiles, and subsequent bending of the pressed strip in order to form a catenary which compensates for length variations of the strip due to pressing thereof.

These and further characterising features of the process are set forth in the claims appended to the present description; the invention also comprises an apparatus for carrying out this process, whose features are also stated in the claims.

All of these features will emerge more clearly from the description provided herein below, relating to an indicative and non-limiting embodiment of the invention shown in the accompanying drawings wherein:
- Fig. 1 depicts an insulating panel having the aspect of a bent-tile roofing in accordance with the invention;
- Fig. 2 shows a side view of an apparatus for carrying out the process of continuous manufacturing of panels according to the invention;
- Fig. 3 shows a longitudinal section through a continuous press in the apparatus of Fig. 2;
- Figs. 4 and 5 are respective cross-sections along the lines IV-IV and V-V in Fig. 3;
- Fig. 6 shows an enlarged detail of Fig. 2;
- Fig. 7 is a diagram illustrating the operation of the detail in Fig. 6.

With reference to the first of these figures, a panel denoted overall by 1 is shown therein, which comprises an upper face 2 made of sheet metal profiled and pressed so as to have the appearance of a bent-tile roofing

This metal sheet may be made of steel, copper or other metal, likewise the opposite sheet forming the lower face 3 of the panel, which is essentially flat and stiffened by light ribbing.

An insulating core 5 consisting of expanded polyurethane is present between the two faces 2 and 3 of the panel; furthermore, the upper face 2 has a projecting edge 8 intended to overlap with an adjacent panel in the assembled state, to form the roof of a house.

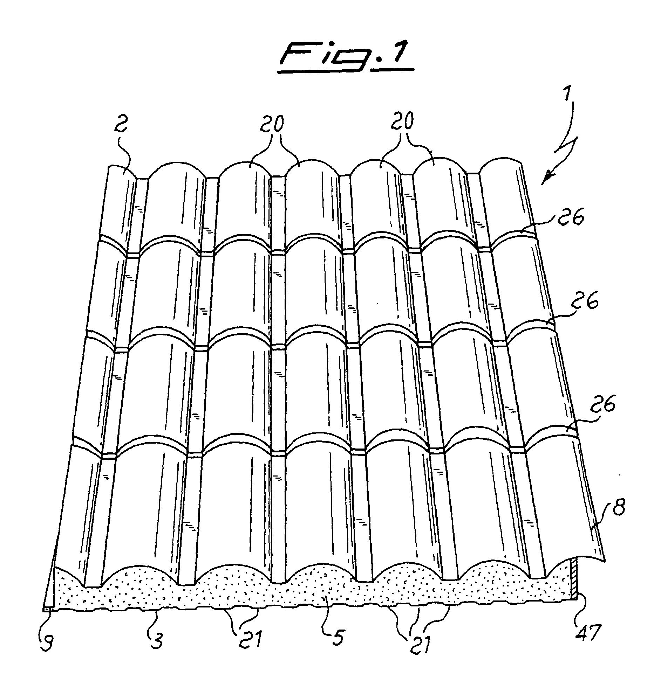

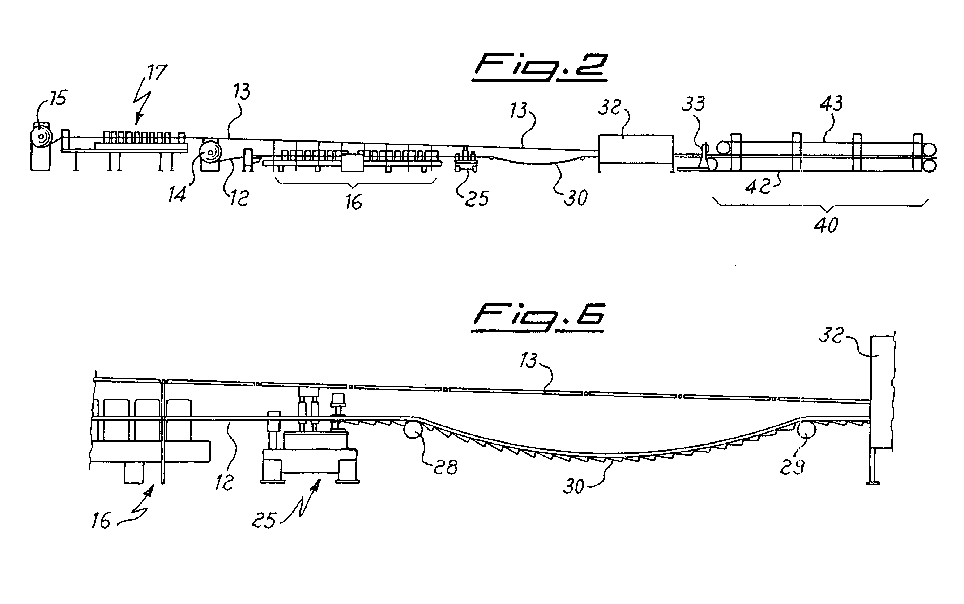

This panel is manufactured in a continuous manner using the plant shown in Fig. 2, starting from two strips of sheet metal 12 and 13 which are unwound from respective reels 14 and 15; in a preferred embodiment of the invention, the strip 12 from which the upper face 2 of the panels is obtained, advances at a lower level than the strip 13 from which the lower face 3 is obtained.

Both strips are profiled in respective roll forming devices 16 and 17 of the type known per se; in the first of these devices there are formed the longitudinal undulations 20 which define the profiles of the bent tiles in panel 1, while the second device forms the ribs 21 which stiffen the lower face 3.

Downstream of the roll forming device 16 there is a press 25 which forges the transverse ribs 26 in the strip 12 as shown schematically in Fig. 7, that provide the overlapping effect of the tiles in panel 1.

This press is known per se and downstream thereof the strip 12 profiled and pressed according to the aspect of the upper face of panel 1, is suspended between two rollers 28 and 29 so as to form a catenary 30; the latter gives rise to a surplus of strip material 12 after the press 25, which has the function of compensating the length variations of the strip caused by formation of the transverse ribs 26. Thereafter, the two strips 12 and 13 pass into a heating oven 32 in order to favour the subsequent expansion of the polymer resin 5 that forms the insulating core of the panels, applied with a device 33 known per se downstream the oven 32.

The expansion of the resin occurs in a continuous press 40 according to the following explanation.

The press 4U includes two continuous chain conveyors 42 and 43, namely a bottom conveyor and an upper conveyor, which comprise respective cross-members 44 and 45; the cross-members 44 of the bottom conveyor 42 are provided with cradles 48 having a uniform cross-section like that of the profile of the ribs 26 formed in the strip 12.

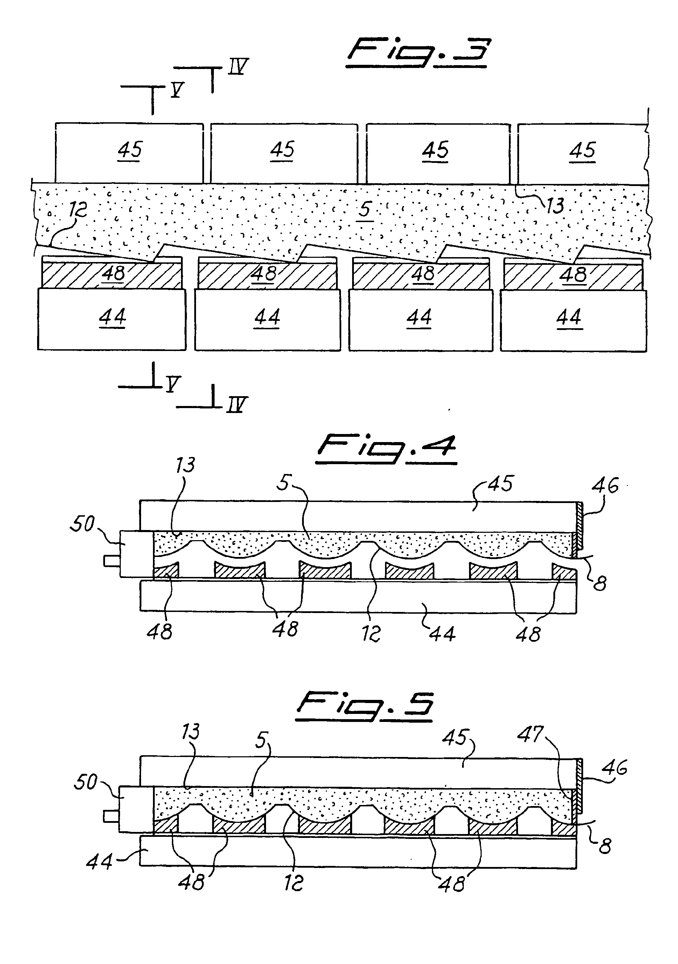

In this manner the strip 12 rests on the cradles 48 only in the region of the aforementioned ribs, as can be seen in Fig. 3 which shows a longitudinal cross-section along the central plane of one of the undulations 20, advancing from left to right.

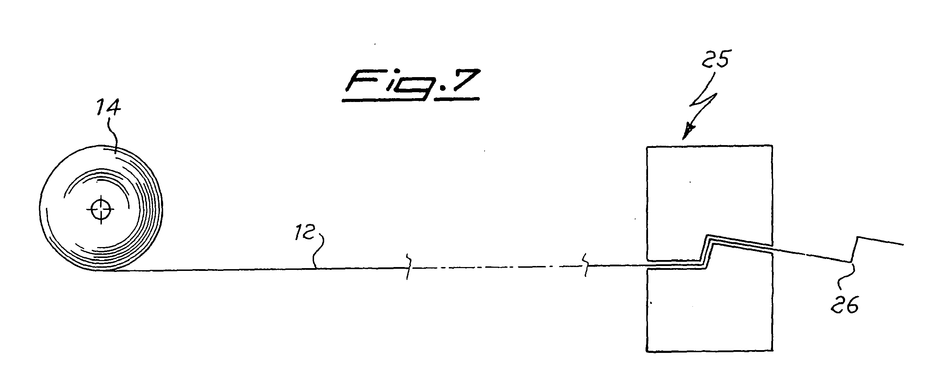

As stated farther above, the panels 1 considered herein have a projecting edge 8 on the upper face 2; during manufacturing, this edge hinders the lateral containment of the expanded resin (or foam) carried out by using known systems. For better understand this point, reference should be made to Figures 4 and 5 wherein containment of the expanded resin 5 on the opposite side to that where the projecting edge 8 of the strip 12 is located, is obtained in a known manner by using a continuous conveyor 50.

As can be seen, such a conveyor would not have enough space on the opposite side where the projecting edge 8 is situated, because of its curvature according to the profile of the bent tiles: in order to overcome this drawback, plates 46 extending towards the strip 12 and laterally constraining the expanded resin 5, are fixed to the ends of the cross-members 45 of the upper conveyor 43.

In this connection it must be noted that differently from the manufacturing process of normal fretted panels, in the present case it is not possible to leave the projecting edge 8 flat, for providing the necessary space to arrange a continuous conveyor like that located on the opposite side, and then profiling said flat edge downstream the continuous press 40, since the transverse ribs 26 prevent bending and profiling of the strip 12 in the longitudinal direction.

In order to improve the constraint of the expanded resin 5, it is preferable to use also a strip-like seal 47 arranged between the resin and the plates 46, which later will also have the function of acting as a lateral sealing element in the finished panels.

The latter are obtained after cutting with a shear (not shown in the drawings because known per se), of the continuous semi-finished product which emerges from the continuous press 40; it is however evident that between the press and the cutting, the semi-finished product could also be subject to other treatments, for example painting or some further surface finishing.

From what has been explained hitherto it is possible to understand how the process for the continuous manufacturing of panels carried out by the foregoing apparatus, achieves the object set forth initially for the invention.

Indeed, by supporting the strip 12 in the region of its transverse ribs 26 with the cradles 48 having a uniform cross-section according to that of the said ribs, is effective independently of the distance between the latter.

In other words it is clear that even when the distance between the ribs 26 changes, the strip 12 is supported always in the same manner since the cross-section of the cradles 48 remains the same and the ribs can therefore rest always regularly on different points thereof; in this connection it is obvious that it will be sufficient to have cradles with length different from the distance between the ribs 26, so as to prevent the latter from falling in the spaces between one cradle and the next.

It should be also added that these spaces will have sufficiently small dimensions such that even when a rib 26 will fall there, it would have no consequence since the preceding and the following ribs rest correctly on the respective cradles.

All of this would not be possible if the cradles had a configuration as that of the tiles, namely with a non-uniform cross section corresponding to the sawtooth profile of the tiles shown in the drawings.

Indeed it can be understood that in this case the length of the cradles must be identical to the distance between the transverse ribs 26 defining the length of the tiles, thereby requiring to perform a tool changing every time an insulating panel with tiles of different length is to be manufactured.

Furthermore, supporting of the transverse ribs 26 by using cradles 48 with the constant profile, allows containment of the sheet-metal strip 12 preventing the latter from being deformed when the polymer resin of the panel expands.

In other words, the present invention teaches that it is not necessary to support the strip 12 over the whole of its surface during the so-called "foaming" (i.e. resin expansion) step, but it is sufficient to support it in the region of its transverse ribs 26 by means of elements (cradles 48) of matching shape.

However, there are also other important advantageous results achieved by the manufacturing process of the panels in accordance with the invention.

These include the fact that the support of the strip 12 with the aforementioned cradles, may be easily applied in pre-existing plants; indeed continuous presses comprising chain conveyors and cross-members considered herein are already known in the art, but none of them foresees the use of cradles or other similar shapes for the purposes illustrated above.

The manufacture of these cradles, preferably made of plastics, rubber or other materials not too hard because otherwise they could damage the metal of the strip, does not involve particular difficulties and the cradles may also be easily fixed (using screws, brackets, etc.) to the cross-members of an already existing conveyor.

Similar considerations apply also to the side plates 46 which ensure containment of the expanding foam on the side where the projecting edge 8 of the strip 12 is located.

These plates constitute a simple and effective solution for replacement of the continuous lateral conveyor which cannot be used in that position, for the reasons already explained above and to which reference should be made for the sake of brevity.

It is also worth mentioning the importance of the catenary 30 for ensuring the continuity of the production process according to the invention.

As can be seen in Figure 7, the forming of the transverse ribs 26 implies that a step-like fold is imparted to the metal sheet such that, in the plane of longitudinal feeding of the strip 12, the latter undergoes a periodic shortening due to said folding operation which occurs at each stroke of the press 25.

Since in the diagram of Fig. 2 the strip 12 is machined by the roll forming device 16 before entering into the press 25, it cannot have any slippage in the longitudinal direction because the forming rolls which grip the strip, do not permit it. A similar condition would occur in the continuous press 40 if the catenary 30 were not present, since the chain conveyors 42, 43 keep the continuous semi-finished product arranged between them, blocked.

The catenary 30, on the other hand, allows the presence of a surplus of pressed strip material 12 downstream of the press 25, which compensates for the periodic shortening due to the formation of the ribs 26.

In this connection it must be also pointed out that the catenary 30 is preferably arranged downstream of the press 25, since flexing of the strip in the manner shown is favoured by the transverse ribs formed therein; indeed, upstream the press said strip is profiled only longitudinally with the undulations 20, which prevent catenary bending thereof.

However, in principle, such an alternative is not to be ruled out in the case of thin sheets, small undulations and periodic shortening of the strip by a small amount (i.e. low transverse ribs).

Obviously other variations ot the invention with respect to the embodiment described are possible.

Firstly it must be noted that the invention is applicable also to the manufacture of panels which have an appearance different from that of bent tiles, such as for example that of plain tiles, under tiles or the like; it is merely a question of profiling the metal sheet longitudinally and pressing it with undulations and transverse ribs different from those shown in the drawings.

Supporting of the forged strip in the continuous press will nevertheless be performed using the same processes already explained, with the cradles which will have a uniform cross-section according to the profile of the transverse ribs formed in the sheet metal.

More generally it may be stated that the principles arising from the invention are applicable to all those cases where there is a sheet metal strip with transverse ribs formed therein; however, it should be emphasised that this strip must not be necessarily the strip which advances in the lower position inside the continuous press.

In other words, the strip pressed with the transverse ribs could equally well be in the upper position and in contact with the cradles 48 provided on the conveyor 43.

It must also be pointed out that alternative solutions for the cradles 48 may be envisaged on the basis of the teaching provided by the present invention.

For example it can be easily understood that the cradles could be incorporated in the transverse members; in other words, instead of forming the cradles 48 as separate parts fixed onto the cross-members 44, they could be formed directly in the latter which, for this purpose, should be made preferably of plastic or the like. Obviously, in this case the thickness of the cross-members shall have suitable dimensions.

As an alternative to this solution, the cradles 48 could be incorporated in a shaped strip, i.e. it is possible to provide a belt conveyor whose cross section reproduces that of the cradles 48 shown in Fig. 4, supported along its path by fixed members like in the known art.

As regards forming of the transverse ribs, alternatives to that described above may also be designed. For example the surplus of pressed strip material 12 downstream of the press 25 may be obtained by flexing it upwards (and not downwards as in the case of the catenary 30).

These and further embodiments nevertheless fall within the scope of the claims which follow.

## Claims

1. Process of manufacturing insulating panels, in which a strip (12) with longitudinal undulations (20) and transverse ribs (26) reproducing bent tiles, plain tiles or similar tile components of a roofing is associated with an insulating material (5) causing it to be fed in a continuous press (40), **characterized in that** in said press (40) the transverse ribs (26) of the strip (12) are respectively in contact with surfaces, said surfaces having a uniform cross section and a profile according to that of at least a main portion of said ribs (26).

2. Process according to Claim 1, wherein the strip (12) rests on said surfaces (48) arranged underneath it.

3. Process according to Claims 1 and 2, wherein said surfaces in contact with the transverse ribs (26) of the strip (12) comprise cradles (48) arranged on cross-members (44) moved by a first continuous conveyor (42) with chains or the like.

4. Process according to the preceding claims, wherein the cradles (48) are separate elements fixed onto the cross-members (44).

5. Process according to Claim 4, wherein the cradles (48) are made of plastic material or in any case non-metallic material.

6. Process according to the preceding claims, wherein the strip (12) comprises an edge (8) projecting laterally from the insulating material (5) and wherein the continuous press (40) comprises a second conveyor (43) situated opposite to the first conveyor, for moving cross-members (45) provided with a plate (46) extending towards the projecting edge (8) of the strip (12).

7. Process according to the preceding claims, wherein the strip (12) advances continuously between a press (25) forming the transverse ribs (26) and the continuous press (40), and wherein along the strip feeding path between the former press and the latter press, it forms a catenary (30).

8. Process according to the preceding claims, wherein the strip (12) is metallic.

9. Process according to the preceding claims, wherein a second strip (13) is fed in the continuous press (40) in a condition opposed to the pressed strip (12) with the transverse ribs (26), and wherein the insulating material (5) comprises expanded polymer resin arranged between said strips.

10. Apparatus for carrying out the process according to the preceding claims, **characterized in that** it comprises a continuous press (40) wherein a first continuous conveyor (42) is configured to move cross-members (44) on which there are provided cradles (48), said cradles (48) having a cross-section substantially uniform/in the longitudinal direction of a strip (12) pressed with transverse ribs (26).

11. Apparatus according to Claim 10, wherein the cradles (48) are made of plastic material or in any case non-metallic material.

12. Apparatus according to Claim 11, comprising a second continuous conveyor (43) opposite to the first conveyor which is configured to move cross-members (45) having at one end plates (46) extending towards the first conveyor (42).

13. Apparatus according to the preceding claims, comprising a press (25) for forming transverse ribs (26) in the strip (12), arranged upstream of the continuous press (40), and wherein means (28, 29) are present between said presses (25, 40) in order to keep the pressed strip (12) suspended.

14. Apparatus according to Claim 13, wherein the means for keeping the strip suspended comprise rollers (28, 29) spaced from each other in a sufficient manner that the strip may form a catenary (30).

## Patentansprüche

1. verfahren zur Herstellung von Isolierplatten, in denen ein Streifen (12) mit Längswellen (20) und Querrippen (26) gebogene Dachziegel, ebene Dachziegel oder ähnliche Dachziegelkomponenten eines Daches bildet und mit einem Isoliermaterial (5) versehen wird, das in einer kontinuierlichen Presse (40) zugeführt wird, **dadurch gekennzeichnet, daß** in der Presse (40) die Querrippen (26) des Streifens (12) im Kontakt mit entsprechenden Flächen stehen, die einen gleichmäßigen Querschnitt und ein Profil entsprechend mindestens dem Profil eines Hauptabschnittes der Rippen (26) aufweisen,

2. Verfahren nach Anspruch 1, **dadurch gekennzeichnet, daß** der Streifen (12) auf den darunter angeordneten Flachen (48) ruht.

3. Verfahren nach Anspruch 1 oder 2, **dadurch gekennzeichnet, daß** die im Kontakt mit den Querrippen (269 des Streifens (12) stehenden Flächen Stützbögen (48) aufweisen, die auf Quergliedern (44) angeordnet sind, die durch ein erstes Transportband (42) mit Ketten oder dergleichen bewegt werden.

4. Verfahren nach einem oder mehreren der vorgehenden Ansprüche, **dadurch gekennzeichnet, daß** die Stützbögen (48) an den Quergliedern (44) befestigte, getrennte Elemente sind.

5. Verfahren nach Anspruch 4, **dadurch gekennzeichnet, daß** die Stützbögen (48) aus Kunststoff oder einem auf jeden Fall nicht-metallischen Material bestehen.

6. Verfahren nach einem oder mehreren der vorgehenden Ansprüche, **dadurch gekennzeichnet, daß** der Streifen (12) eine Kante (8) aufweist, die sich lateral von dem Isoliermaterial (5) erstreckt, und daß die kontinuerliche Presse (40) ein gegenüber dem ersten Transportband angeordnetes zweites Transportband (43) zum Bewegen der Querglieder (45) aufweist, die mit einer sich in Richtung der vorstehenden Kante (8) des Streifens (12) erstreckenden Platte (46) versehen sind.

7. Verfahren nach einem oder mehreren der vorgehenden Ansprüche, **dadurch gekennzeichnet, daß** der Streifen (12) kontinuierlich zwischen einer die Querrippen (26) formenden Presse (25) und der kontinuierlichen Presse (40) fortbewegt wird und daß der Streifen entlang des Streifenszufuhrungspfades zwischen der ersten Presse und der zweiten Presse eine Kettenlinie (30) bildet.

8. Verfahren nach einem oder mehreren der vorgehenden Ansprüche, **dadurch gekennzeichnet, daß** der Streifen (12) metallisch ist.

9. Verfahren nach einem oder mehreren der vorgehenden Ansprüche, **dadurch gekennzeichnet, daß** in der kontinuierlichen Presse (40) ein zweiter Streifen (13) gegenüber dem gepreßten Streifen (12) mit den Querrippen (26) eingeführt wird und daß das Isoliermaterial (5) expandiertes Polymermaterial enthält, das zwischen den Rippen angeordnet Ist.

10. Vorrichtung zur Durchführung des Verfahrens nach einem oder mehreren der vorgehenden Ansprüche, **dadurch gekennzeichnet, daß** sie eine kontinuierliche Presse (40) enthält, in der ein erstes Transportband (42) dazu ausgebildet ist, Querglieder (44) zu bewegen, auf denen Stützbögen (48) angeordnet sind, die einen im wesentlichen gleichmäßigen Querschnitt in Längsrichtung eines Streifens (12) aufweisen, in den Querrippen eingepreßt sind.

11. Vorrichtung nach Anspruch 10, **dadurch gekennzeichnet, daß** die Stützbögen (48) aus Kunststoff oder einem auf jeden Fall nicht-metallischen Material bestehen.

12. Vorrichtung nach Anspruch 11, **gekennzeichnet durch** ein zweites kontinuierliches Transportband (43), das gegenüber dem ersten Transportband angeordnet ist, und das dazu ausgebildet ist, Querglieder (45) zu bewegen, die an einem Ende sich In Richtung auf das erste Transportband (42) erstreckende Platten (46) aufweisen.

13. Vorrichtung nach einem oder mehreren der vorgehenden Ansprüche, **dadurch gekennzeichnet, daß** stromaufwärts der kontinuierlichen Presse (40) eine Presse (25) zurm Formen von Querrippen (26) in dem Streifen (12) vorgesehen ist und daß zwischen den Pressen (25, 40) Mittel (28, 29) vorgesehen sind, um den Streifen (12) aufgehangt zu halten.

14. Vorrichtung nach Anspruch 13, **dadurch gekennzeichnet, daß** die Mittel zum Aufhängen des Streifens Rollen (28, 29) enthalten, die in ausreichendem Abstand voneinander angeordnet sind, damit der Streifen eine Kettenlinie (30) bildet.

## Revendications

1. Procédé de fabrication de panneaux isolants, dans lequel une bande (12) ayant des ondulations longitudinales (20) et des nervures transversales (26) reproduisant des tuiles flamandes, des tuiles plates ou des composants de tuile similaires d'une couverture de toit est associée à un matériau isolant (5) l'amenant à être introduit dans une presse en continu (40), **caractérisé en ce que** dans ladite presse (40), les nervures transversales (26) de la bande (12) sont respectivement en contact avec des surfaces, lesdites surfaces ayant une section transversale uniforme et un profil conforme à celui d'au moins une partie principale desdites nervures (26).

2. Procédé selon la revendication 1, dans lequel la bande (12) repose sur lesdites surfaces (48) agencées en dessous.

3. Procédé selon les revendications 1 et 2, dans lequel lesdites surfaces qui sont en contact avec les nervures transversales (26) de la bande (12) comprennent des berceaux (48) agencés sur des traverses (44) déplacées par un premier convoyeur continu (42) avec des chaînes ou similaires.

4. Procédé selon les revendications précédentes, dans lequel les berceaux (48) sont des éléments séparés fixés sur les traverses (44).

5. Procédé selon la revendication 4, dans lequel les berceaux (48) sont composés d'un matériau en plastique ou dans tous les cas d'un matériau non métallique.

6. Procédé selon les revendications précédentes, dans lequel la bande (12) comprend un bord (8) faisant saillie latéralement à partir du matériau isolant (5) et dans lequel la presse en continu (40) comprend un deuxième convoyeur (43) situé à l'opposé du premier convoyeur, permettant de déplacer des traverses (45) munies d'une plaque (46) s'étendant vers le bord faisant saillie (8) de la bande (12).

7. Procédé selon les revendications précédentes, dans lequel la bande (12) avance en continu entre une presse (25) formant les nervures transversales (26) et la presse en continu (40), et dans lequel, le long du chemin d'alimentation de la bande entre la première presse et la deuxième presse, il se forme une chaînette (30).

8. Procédé selon les revendications précédentes, dans lequel la bande (12) est métallique.

9. Procédé selon les revendications précédentes, dans lequel une deuxième bande (13) est alimentée dans la presse en continu (40) dans un état opposé à la bande (12) passée dans la presse avec les nervures transversales (26), et dans lequel le matériau isolant (5) comprend une résine polymère expansée agencée entre lesdites bandes.

10. Appareil permettant d'exécuter le procédé selon les revendications précédentes, **caractérisé en ce qu'**il comprend une presse en continu (40) dans laquelle un premier convoyeur continu (42) est configuré pour déplacer des traverses (44) sur lesquelles sont prévus des berceaux (48), lesdits berceaux (48) ayant une section transversale sensiblement uniforme dans le sens longitudinal d'une bande (12) passée dans la presse avec les bandes transversales (26).

11. Appareil selon la revendication 10, dans lequel les berceaux (48) sont composés d'un matériau en plastique ou dans tous les cas d'un matériau non métallique.

12. Appareil selon la revendication 11, comprenant un deuxième convoyeur continu (43) opposé au premier convoyeur, qui est configuré pour déplacer les traverses (45) ayant à une extrémité des plaques (46) s'étendant vers le premier convoyeur (42).

13. Appareil selon les revendications précédentes, comprenant une presse (25) permettant de former des nervures transversales (26) dans la bande (12) agencée en amont de la presse en continu (40), et dans lequel des moyens (28, 29) sont présents entre lesdites presses (25, 40) afin de maintenir la bande (12) passée dans la presse suspendue.

14. Appareil selon la revendication 13, dans lequel le moyen permettant de maintenir la bande suspendue comprend des rouleaux (28, 29) espacés l'un de l'autre suffisamment pour que la bande puisse former une chaînette (30).
